# DEMANDE DE BREVET EUROPEEN

(11) **EP 2 302 579 A1**
(43) Date de publication de la demande: **30.03.2011**
(21) Numéro de dépôt: 10173458.0
(22) Date de dépôt: 19.08.2010
(51) Int. Cl.: G06Q 30/00

(54) **Procédé et dispositif d'obtention automatique d'informations relatives au téléchargement de contenus via un réseau de communication**

(30) Priorité: 14.09.2009 FR 0956299
(71) Demandeur: Alcatel Lucent, 75007 Paris (FR)
(72) Inventeur: Rubin, Ludovic, 78141 Velizy (FR); Van Wonterghem, Geert Arthur Edith, 2070 Zwijndrecht (BE); Robinson, Dave, Aldbourne Wiltshire SN8 2NP (GB)
(74) Mandataire: Shamsaei Far, Hassan

(57) **Abrégé**

Un dispositif (D) est dédié à l'obtention automatique d'informations qui sont relatives au téléchargement de contenus par des clients d'au moins un opérateur de réseau de communication (RC). Ce dispositif (D) comprend i) des moyens de comparaison (MC) chargés de comparer des premiers ensembles de données, qui constituent des profils de clients de cet opérateur, à un second ensemble de données, qui décrivent un contenu qui est susceptible d'être mis à la disposition de clients de cet opérateur, afin de déterminer le nombre de clients dont le profil correspond au moins partiellement à ce contenu, et ii) des moyens de traitement (MT) chargés d'attribuer à ce contenu une valeur primaire qui est fonction au moins de ce nombre de clients déterminé.

## Description

L'invention concerne les réseaux de communication adaptés au téléchargement de contenus, éventuellement multimédia, et plus précisément l'obtention d'informations qui sont relatives au téléchargement de contenus par des clients d'au moins un opérateur de réseau(x) de communication.

On entend ici par « contenu » un ensemble de données, d'un ou plusieurs types, qui définit un programme de télévision ou de vidéo ou audio (radiophonique ou musical) ou de jeux ou multimédia, ou encore un fichier informatique (ou « data »).

Afin qu'un service de fourniture de contenus mis à la disposition de clients d'un opérateur de réseau(x) de communication puisse être rentable, il faut non seulement que le plus grand nombre possible de ces contenus plaise auxdits clients, mais également que ces contenus aient été achetés à des fournisseurs de contenus le moins cher possible afin de pouvoir être revendus auxdits clients à des prix raisonnables. Or, lorsqu'un contenu n'a pas encore été rendu accessible il est particulièrement difficile de déterminer à l'avance sa future popularité et donc d'estimer les prix auxquels il peut être raisonnablement acheté et revendu.

L'invention a donc pour but de proposer une solution permettant d'obtenir des informations relatives au téléchargement de contenus, en particulier avant leur mise à disposition publique, par exemple (et non limitativement) dans le but d'estimer les prix auxquels ils peuvent être raisonnablement achetés et revendus.

Elle propose à cet effet un procédé, destiné à permettre l'obtention automatique d'informations relatives au téléchargement de contenus par des clients d'au moins un opérateur de réseau de communication, et comprenant les étapes suivantes :
i) comparer des premiers ensembles de données qui constituent des profils de clients de l'opérateur considéré à un second ensemble de données qui décrivent un contenu qui est susceptible d'être mis à la disposition de clients de cet opérateur, afin de déterminer le nombre de clients dont le profil correspond au moins partiellement à ce contenu, et
ii) attribuer à ce contenu une valeur primaire qui est fonction au moins de ce nombre de clients déterminé.

Le procédé selon l'invention peut comporter d'autres caractéristiques qui peuvent être prises séparément ou en combinaison, et notamment :
- à l'étape i) on peut comparer les premiers ensembles de données, qui constituent les profils de tous les clients de l'opérateur considéré, au second ensemble de données, qui décrit un contenu susceptible d'être mis à la disposition de clients de cet opérateur, afin de déterminer un premier nombre de clients dont le profil correspond au moins partiellement à ce contenu, et on peut comparer les premiers ensembles de données, qui constituent les profils de clients de l'opérateur appartenant à au moins un groupe choisi correspondant à au moins un critère choisi, au second ensemble de données, afin de déterminer le nombre de clients du groupe choisi dont le profil correspond au moins partiellement au contenu. Dans ce cas, à l'étape ii) on peut attribuer au contenu considéré des première et seconde valeurs primaires qui sont fonction respectivement des premier et second nombres de clients déterminés à l'étape i);
- chaque valeur primaire peut être pondérée en fonction d'au moins un critère choisi;
- la valeur primaire peut être représentative de la popularité potentielle qu'aurait le contenu considéré si il était disponible;
- il peut comprendre une étape iii) consistant à estimer une valeur secondaire en fonction de chaque valeur primaire qui a été attribuée au contenu considéré;
   ➢ la valeur secondaire peut être représentative du prix auquel l'opérateur considéré peut acheter le contenu considéré pour le revendre à des clients;
   ➢ il peut comprendre une étape iv) consistant à estimer une valeur tertiaire représentative du prix de vente du contenu considéré à certains au moins des clients de l'opérateur considéré en fonction de la valeur secondaire qui a été attribuée à ce contenu à l'étape iii);
      - il peut comprendre une étape v) consistant à intégrer le contenu considéré dans un groupe de contenus qui sont choisis en fonction des valeurs tertiaires qui leurs ont été attribuées respectivement et d'au moins une caractéristique choisie commune à ces contenus;
   ➢ il peut comprendre une étape vi) consistant, lorsque le contenu considéré a été mis à la disposition de clients pendant une durée choisie, à déterminer le nombre de clients qui ont acheté et téléchargé ce contenu afin de le comparer au nombre de clients initialement déterminé pour ce même contenu et dont est issue la valeur primaire qui a été attribuée à ce contenu, puis à adapter la valeur tertiaire qui avait été attribuée à ce contenu en fonction du résultat de cette comparaison.

L'invention propose également un dispositif, destiné à permettre l'obtention automatique d'informations qui sont relatives au téléchargement de contenus par des clients d'au moins un opérateur de réseau de communication, et comprenant :
- des moyens de comparaison agencés (ou conçus) pour comparer des premiers ensembles de données, qui constituent des profils de clients de l'opérateur considéré, à un second ensemble de données, qui décrivent un contenu qui est susceptible d'être mis à la disposition de clients de cet opérateur, afin de déterminer le nombre de clients dont le profil correspond au moins partiellement à ce contenu, et
- des moyens de traitement agencés (ou conçus) pour attribuer à ce contenu une valeur primaire qui est fonction au moins du nombre de clients déterminé.

Le dispositif selon l'invention peut comporter d'autres caractéristiques qui peuvent être prises séparément ou en combinaison, et notamment :
- ses moyens de comparaison peuvent être agencés i) pour comparer les premiers ensembles de données, qui constituent les profils de tous les clients de l'opérateur considéré, au second ensemble de données, qui décrivent un contenu qui est susceptible d'être mis à la disposition de clients de cet opérateur, afin de déterminer un premier nombre de clients dont le profil correspond au moins partiellement à ce contenu, et ii) pour comparer les premiers ensembles de données, qui constituent les profils de clients de cet opérateur qui appartiennent à au moins un groupe choisi correspondant à au moins un critère choisi, au second ensemble de données, afin de déterminer le nombre de clients du groupe choisi dont le profil correspond au moins partiellement au contenu. Dans ce cas, les moyens de traitement peuvent être agencés pour attribuer au contenu considéré des première et seconde valeurs primaires qui sont fonction respectivement des premier et second nombres de clients déterminés;
- ses moyens de traitement peuvent être agencés pour pondérer chaque valeur primaire en fonction d'au moins un critère choisi;
- ses moyens de traitement peuvent être agencés pour estimer une valeur secondaire en fonction de chaque valeur primaire qui a été attribuée au contenu considéré;
   ➢ ses moyens de traitement peuvent être agencés pour estimer une valeur secondaire qui est représentative du prix auquel l'opérateur considéré peut acheter le contenu considéré pour le revendre à des clients;
   ➢ il peut comprendre des moyens de gestion agencés pour estimer une valeur tertiaire qui est représentative du prix de vente du contenu considéré à certains au moins des clients de l'opérateur considéré en fonction de la valeur secondaire qui a été attribuée à ce contenu;
      - les moyens de gestion peuvent être agencés pour intégrer le contenu considéré dans un groupe de contenus qui sont choisis en fonction des valeurs tertiaires qui leurs ont été attribuées respectivement et d'au moins une caractéristique choisie qui est commune à ces contenus;
      - les moyens de gestion peuvent être agencés, lorsque le contenu considéré a été mis à la disposition de clients pendant une durée choisie, pour déterminer le nombre de clients qui ont acheté et téléchargé ce contenu afin de le comparer au nombre de clients qui a été initialement déterminé pour ce même contenu et dont est issue la valeur primaire attribuée audit contenu, puis pour adapter ladite valeur tertiaire qui a été attribuée à ce contenu en fonction du résultat de cette comparaison.

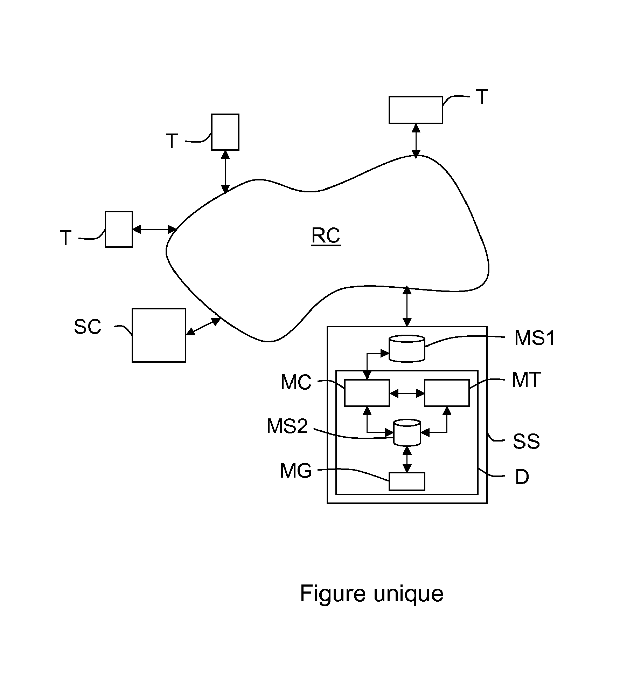

D'autres caractéristiques et avantages de l'invention apparaîtront à l'examen de la description détaillée ci-après, et du dessin annexé, sur lequel l'unique figure illustre de façon très schématique et fonctionnelle un équipement de réseau connecté à un réseau de communication et comportant un exemple de réalisation d'un dispositif d'obtention d'informations selon l'invention. Le dessin annexé pourra non seulement servir à compléter l'invention, mais aussi contribuer à sa définition, le cas échéant.

L'invention a pour objet de permettre l'obtention automatique d'informations relatives au téléchargement de contenus, éventuellement multimédia, par des équipements de communication (T) de clients d'au moins un opérateur de réseau(x) de communication (RC).

Dans ce qui suit, on considère à titre d'exemple non limitatif que les contenus sont des vidéos, par exemple proposées par un opérateur de réseau de communication via un service de vidéo à la demande (ou VoD). Mais, l'invention n'est pas limitée à ce type de contenu. Elle concerne en effet tout type de contenu constitué d'un ensemble de données, d'un ou plusieurs types, définissant par exemple un programme de télévision ou de vidéo ou audio (radiophonique ou musical) ou de jeux ou multimédia, ou encore un fichier informatique (ou « data »).

Par ailleurs, on considère dans ce qui suit, à titre d'exemple non limitatif, que le réseau de communication est un réseau filaire, par exemple de type xDSL. Mais, l'invention n'est pas limitée à ce type de réseau de communication. Elle concerne en effet tout type de réseau de communication pouvant transporter des contenus, qu'il soit de type filaire ou non filaire (ou radio). Par ailleurs, l'accession à des contenus peut se faire en mode « nomade » ou en mode fixe via l'Internet.

On a schématiquement représenté sur l'unique figure un réseau de communication RC, ici de type filaire, appartenant à (ou utilisé par) un opérateur et auquel sont connectés des équipements de communication T appartenant à des clients de cet opérateur (ou d'un opérateur ayant passé des accords de fourniture de service(s) avec cet opérateur (pour autoriser le « roaming » (ou nomadisme))).

Ces équipements de communication T peuvent être de tout type connu de l'homme de l'art dès lors qu'ils peuvent télécharger des contenus (ici des vidéos) via au moins le réseau de communication RC. Il pourra donc s'agir d'ordinateurs fixes ou portables, de récepteurs de contenus (comme par exemple des décodeurs, des passerelles résidentielles (ou « residential gateways ») ou des STBs (« Set-Top Boxes »)), dès lors qu'ils sont équipés de moyens de communication pouvant se connecter à un réseau de communication RC (ici de type filaire à titre d'exemple non limitatif).

On considère en outre dans ce qui suit, à titre d'exemple non limitatif, que les contenus sont initialement issus d'un serveur de contenus SC connecté au (ou accessible via le) réseau de communication RC et appartenant à un fournisseur de contenus ou bien à un opérateur de réseau. Mais, cela n'est pas obligatoire étant donné que leur origine (ou source) peut varier en fonction de leur type. Ainsi, certains contenus peuvent être téléchargés d'un serveur de contenus dans un serveur de réseau ou bien directement dans un équipement de communication T.

L'invention propose notamment de mettre en oeuvre un procédé d'obtention automatique d'informations. Ce procédé peut par exemple être mis en oeuvre au moyen d'un dispositif D selon l'invention, du type de celui qui est illustré non limitativement sur l'unique figure.

On notera que dans l'exemple non limitatif illustré sur l'unique figure, le dispositif D fait partie d'un équipement de réseau SS qui est connecté au (ou accessible via le) réseau de communication RC. Cet équipement de réseau SS peut par exemple être un serveur de service(s). Mais, un dispositif D, selon l'invention, peut constituer un équipement de réseau pouvant se connecter à un réseau de communication ou bien un équipement ou élément connecté (ou accessible) à un équipement de réseau ou à un équipement de communication. On notera que des dispositifs D peuvent être éventuellement implantés dans plusieurs équipements de réseau.

Le procédé selon l'invention comprend au moins deux étapes principales.

Une première étape principale (i) consiste à comparer des premiers ensembles de données E1, qui constituent des profils de clients de l'opérateur considéré, à un second ensemble de données E2, qui décrivent un contenu qui est susceptible d'être mis (dans le futur) à la disposition de clients de cet opérateur. Cette comparaison est destinée à permettre la détermination du nombre NC1 de clients ayant un profil qui correspond au moins partiellement au contenu considéré.

On entend ici par « profil de client » une collection de données, éventuellement personnelles, qui décrivent un client de façon explicite et/ou implicite. Il pourra par exemple être constitué d'au moins un attribut, comme par exemple le genre (masculin ou féminin), la catégorie professionnelle, la catégorie d'âge, le nombre de personnes vivant avec lui (dans son foyer), une préférence, une habitude, ou un intérêt relatif à ou plusieurs sujets, comme par exemple des programmes de télévision, des programmes radiophoniques, des informations, des publicités, des types de musique ou de film (ou vidéo), des produits à acheter, des divertissements (notamment des jeux) ou des utilisations de service(s). A titre d'exemples, des données explicites peuvent être des données qui décrivent des achats de contenus définissant un intérêt, et des données implicites peuvent être des données qui décrivent le temps passé à regarder un type de contenu et donc qui sont représentatives de l'intérêt pour ce type de contenu.

Par ailleurs, on entend ici par « second ensemble de données E2 » des données (ou « méta-données ») qui constituent une description au moins partielle d'un contenu (ici une vidéo). Tout type de description connue de l'homme de l'art et pouvant faire l'objet d'une analyse, éventuellement, sémantique, nécessaire à sa comparaison à un profil de client, est ici concerné. Ainsi, une description de vidéo peut, par exemple et non limitativement, contenir des informations relatives à des personnes qui ont créé (ou participé à la création de) cette vidéo (réalisateur, producteur, acteurs, compositeur(s) de la bande son, par exemple), ou à son titre, ou à son genre, ou à des mots clés qui caractérisent (ou définissent) cette vidéo, ou à une assistance parentale, ou encore au mode de stockage de cette vidéo (format de stockage, format d'encodage, par exemple).

On comprendra qu'en comparant certaines informations choisies d'un profil de client aux informations contenues dans le second ensemble de données E2 qui décrit un contenu, on peut déterminer si ce contenu est susceptible de plaire à ce client. On notera que les nombre et type(s) d'informations qui doivent être communs à un profil de client et un second ensemble de données E2 peut être défini par l'opérateur. D'une manière générale, plus il existe d'informations communes entre un profil de client et une description de contenu, plus on augmente la probabilité que ce contenu plaise à ce client. On notera également que chaque comparaison est destinée à déterminer le niveau de correspondance (ou « matching ») entre un profil de client E1 et un second ensemble de données E2, ce niveau pouvant être défini par n'importe quel(le) logique ou algorithme fourni(e) par un tiers.

Cette première étape principale (i) peut par exemple être mise en oeuvre par les moyens de comparaison MC qui font partie du dispositif D.

On notera qu'un second ensemble de données E2 peut être fourni au dispositif D par un fournisseur de contenus (via le réseau (de communication) RC) soit spontanément dès qu'il est disponible, soit sur requête d'une personne qui utilise le dispositif D.

Les profils des clients d'un opérateur sont stockés dans des premiers moyens de stockage MS1 qui, comme illustré non limitativement sur l'unique figure, peuvent éventuellement faire partie du serveur de service(s) SS. Mais, ces premiers moyens de stockage MS1 pourraient également faire partie du dispositif D ou bien d'un autre équipement de réseau de l'opérateur, accessible via le réseau RC.

Ces premiers moyens de stockage MS1 peuvent se présenter sous n'importe quelle forme connue de l'homme de l'art, comme par exemple une mémoire (éventuellement purement logicielle et/ou éventuellement de type tampon (pour un stockage temporaire et/ou un traitement à la volée)) ou une base de données.

Une deuxième étape principale (ii) du procédé selon l'invention consiste à attribuer au contenu considéré une valeur primaire VP qui est fonction du nombre de clients NC1 qui a été déterminé pour lui lors de la première étape principale (i).

Par exemple une valeur primaire VP peut être représentative de la popularité potentielle qu'aurait le contenu considéré auprès de(s) clients si il était disponible.

Cette deuxième étape principale (ii) peut par exemple être mise en oeuvre par les moyens de traitement MT du dispositif D.

On notera que dans la première étape principale (i), il est possible d'effectuer pour une même description E2 de contenu plusieurs (au moins deux) comparaisons portant sur des sous-ensembles différents de clients d'un opérateur.

Ainsi, on (les moyens de comparaison MC) peu(ven)t par exemple comparer les premiers ensembles de données E1, qui constituent les profils de tous les clients d'un opérateur, au second ensemble de données E2 qui décrit un contenu susceptible d'être mis à la disposition de clients de cet opérateur, afin de déterminer un premier nombre NC1 de clients dont le profil correspond au moins partiellement à ce contenu, et on peut également comparer les premiers ensembles de données E1, qui constituent les profils de clients de cet opérateur qui appartiennent à au moins un groupe choisi qui correspond à au moins un critère choisi, au même second ensemble de données E2, afin de déterminer le nombre NC2 de clients du groupe choisi dont le profil correspond au moins partiellement au contenu. On comprendra que l'on peut effectuer plusieurs comparaisons sur plusieurs groupes de clients correspondant à des critères au moins partiellement différents.

Tout type de critère permettant de différencier des clients à partir des informations contenues dans leurs profils respectifs peut être envisagé. Ainsi, un groupe pourra comporter des clients qui appartiennent à une classe d'âge choisie (par exemple entre 20 et 30 ans) et/ou qui sont intéressés par des films d'aventure et/ou qui sont de sexe masculin.

Dans ce cas (comparaisons multiple), lors de la seconde étape principale (ii) on attribue au contenu considéré plusieurs valeurs primaires (par exemple VP1 et VP2 dans le cas de deux comparaisons) qui sont fonction respectivement des nombres de clients déterminés (par exemple NC1 et NC2 dans le cas de deux comparaisons).

Chaque valeur primaire VP(i) (par exemple i = 1 ou 2) peut par exemple être stockée en correspondance d'un identifiant du contenu associé. Ce stockage peut être effectué par les moyens de traitement MT dans des seconds moyens de stockage MS2, qui, comme illustré non limitativement, font de préférence partie du dispositif D, mais qui pourraient faire partie du serveur de service(s) SS (par exemple).

Ces seconds moyens de stockage MS2 peuvent se présenter sous n'importe quelle forme connue de l'homme de l'art, comme par exemple une mémoire (éventuellement purement logicielle et/ou éventuellement de type tampon (pour un stockage temporaire et/ou un traitement à la volée)) ou une base de données.

Chaque valeur primaire VP(i) constitue une information, relative au téléchargement du contenu associé par des clients, qui peut ensuite être utilisée par l'opérateur comme il le souhaite dans une troisième étape (iii) du procédé selon l'invention.

Ainsi, une troisième étape (iii) peut consister à estimer une valeur secondaire VS en fonction de chaque valeur primaire VP(i) qui a été attribuée au contenu lors d'une seconde étape principale (ii). On notera qu'une valeur primaire peut être éventuellement pondérée en fonction d'au moins un critère choisi lorsqu'elle sert à estimer une valeur secondaire VS. Cette pondération peut par exemple être fonction de l'importance d'un groupe de clients, par exemple en terme de nombre ou de particularité ou bien de capacité d'achat d'un type de contenu. Elle est plus généralement déterminée et choisie par l'opérateur.

On notera qu'une pondération en fonction d'au moins un critère choisi peut être éventuellement et également utilisée dans l'une au moins des étapes précédentes (i) et (ii).

On notera également que cette troisième étape (iii) peut être mise en oeuvre par des moyens de gestion MG que comprend éventuellement le dispositif D.

A titre d'exemple non limitatif, une valeur secondaire VS peut être représentative du prix auquel un opérateur peut acheter un contenu dans le but de le revendre à des clients.

Chaque valeur secondaire VS peut par exemple être stockée en correspondance de la (ou des) valeur(s) primaire(s) associée(s) et de l'identifiant du contenu associé. Ce stockage peut être effectué par les moyens de gestion MG dans les seconds moyens de stockage MS2 (par exemple).

On notera qu'une valeur secondaire VS constitue également une information de contenu qui peut ensuite être utilisée par l'opérateur comme il le souhaite dans une quatrième étape (iv) du procédé selon l'invention.

Ainsi, une quatrième étape (iv) peut consister à estimer une valeur tertiaire VT(j) qui est représentative du prix de vente du contenu considéré à certains au moins des clients de l'opérateur en fonction de la valeur secondaire VS qui a été attribuée à ce contenu lors d'une troisième étape (iii).

On notera qu'une valeur tertiaire VT(j) peut être un prix de vente ou bien une valeur alphanumérique qui représente un prix de vente ou une fourchette de prix de vente.

On notera également que plusieurs valeurs tertiaires VT(j) peuvent être éventuellement attribuées à plusieurs groupes de clients différents correspondant à des critères au moins partiellement différents, qui peuvent être éventuellement les mêmes que ceux utilisés lors de la première étape principale (i). Par conséquent, tout type de critère permettant de différencier des clients à partir des informations contenues dans leurs profils respectifs peut être envisagé, et notamment l'appartenance à une classe d'âge choisie et/ou l'intérêt pour des films d'aventure et/ou l'appartenance à un même genre (par exemple de sexe masculin).

Chaque valeur tertiaire VT(j) peut par exemple être stockée en correspondance de la (ou des) valeur(s) primaire(s) associée(s) et/ou de la valeur secondaire VS associée et de l'identifiant du contenu associé. Ce stockage peut être effectué par les moyens de gestion MG dans les seconds moyens de stockage MS2 (par exemple).

On notera que cette quatrième étape (iv) peut être mise en oeuvre par les moyens de gestion MG du dispositif D.

On notera également que les valeurs tertiaires VT(j) peuvent être utilisées dans une éventuelle cinquième étape (v) du procédé selon l'invention. Cette cinquième étape (v) consiste à intégrer un contenu dans un groupe de contenus qui est choisi en fonction des valeurs tertiaires attribuées respectivement à ces contenus et d'au moins une caractéristique choisie qui est commune à ces contenus.

Tout type de caractéristique faisant partie des descriptions E2 des contenus peut être utilisé pour constituer un groupe de contenus. Par exemple, lorsqu'une vidéo devant être prochainement disponible constitue le troisième et dernier volet d'une trilogie, on peut constituer un groupe (ou package) comportant les trois vidéos de la trilogie et définir le prix de vente de ce groupe de vidéos en fonction de leurs valeurs tertiaires VT(j) respectives. On pourrait également constituer un groupe avec des films réalisés par un même réalisateur et/ou comportant un même acteur, par exemple.

On notera que cette cinquième étape (v) peut être mise en oeuvre par les moyens de gestion MG du dispositif D.

On notera également qu'une valeur tertiaire VT(j) constitue également une information de contenu qui peut ensuite être utilisée par l'opérateur comme il le souhaite dans une sixième étape (vi) du procédé selon l'invention. Cette sixième étape (vi) peut être effectuée lorsqu'un contenu a été mis à la disposition de clients pendant une durée choisie et avait été précédemment associé à des valeurs au moins primaire(s) VP(i) et secondaire VS.

Dans ce cas, lors de la sixième étape (vi), on peut commencer par déterminer le nombre NC' de clients (appartenant éventuellement à un groupe (j) choisi) qui ont acheté et téléchargé le contenu considéré pendant la durée choisie, afin de le comparer au nombre de clients NC1 (ou NC2) initialement déterminé pour ce même contenu. Il est rappelé que ce dernier nombre de clients NC1 (ou NC2) est celui dont est issue la valeur primaire VP(i) attribuée au contenu considéré, stockée dans les seconds moyens de stockage MS2. On peut ensuite adapter la (une) valeur tertiaire VT(j) attribuée au contenu considéré en fonction du résultat de cette comparaison.

On comprendra en effet que cette comparaison est destinée à déterminer si la popularité prédite d'un contenu correspond à la popularité réelle de ce dernier. Cela permet notamment, lorsque la popularité prédite d'un contenu s'avère (très) supérieure à la popularité réelle, une révision à la baisse du prix de vente d'un contenu et/ou l'intégration de ce dernier dans un groupe (ou package) de contenus. Cela peut également permettre d'attirer l'attention sur un changement d'intérêt ou d'habitude de(s) clients.

On notera que cette sixième étape (vi) peut être mise en oeuvre par les moyens de gestion MG du dispositif D.

Le dispositif d'obtention d'informations D selon l'invention, et notamment ses moyens de comparaison MC et ses moyens de traitement MT, ainsi que ses éventuels moyens de gestion MG, peuvent être réalisés sous la forme de modules logiciels (ou informatiques). Mais, ils peuvent être également réalisés sous la forme de circuits électroniques, ou d'une combinaison de circuits électroniques et de modules logiciels.

L'invention ne se limite pas aux modes de réalisation de dispositif d'obtention d'informations et de procédé d'obtention d'informations décrits ci-avant, seulement à titre d'exemple, mais elle englobe toutes les variantes que pourra envisager l'homme de l'art dans le cadre des revendications ci-après.

## Revendications

1. Procédé d'obtention automatique d'informations relatives au téléchargement de contenus par des clients d'au moins un opérateur de réseau de communication, **caractérisé en ce qu'**il comprend les étapes suivantes : i) comparer des premiers ensembles de données constituant des profils de clients dudit opérateur à un second ensemble de données décrivant un contenu susceptible d'être mis à la disposition de clients dudit opérateur afin de déterminer le nombre de clients dont le profil correspond au moins partiellement audit contenu, et ii) attribuer audit contenu une valeur primaire fonction au moins dudit nombre de clients déterminé.

2. Procédé selon la revendication 1, **caractérisé en ce qu'**à l'étape i) on compare les premiers ensembles de données, qui constituent les profils de tous les clients dudit opérateur, au second ensemble de données décrivant un contenu susceptible d'être mis à la disposition de clients dudit opérateur afin de déterminer un premier nombre de clients dont le profil correspond au moins partiellement audit contenu, et on compare les premiers ensembles de données, qui constituent les profils de clients dudit opérateur appartenant à au moins un groupe choisi correspondant à au moins un critère choisi, audit second ensemble de données afin de déterminer le nombre de clients dudit groupe choisi dont le profil correspond au moins partiellement audit contenu, et à l'étape ii) on attribue audit contenu des première et seconde valeurs primaires fonction respectivement desdits premier et second nombres de clients déterminés.

3. Procédé selon l'une des revendications 1 et 2, **caractérisé en ce que** chaque valeur primaire est pondérée en fonction d'au moins un critère choisi.

4. Procédé selon l'une des revendications 1 à 3, **caractérisé en ce qu'**il comprend une étape iii) consistant à estimer une valeur secondaire en fonction de chaque valeur primaire attribuée audit contenu.

5. Procédé selon la revendication 4, **caractérisé en ce que** ladite valeur secondaire est représentative du prix auquel ledit opérateur peut acheter ledit contenu pour le revendre à des clients.

6. Procédé selon l'une des revendications 4 et 5, **caractérisé en ce qu'**il comprend une étape iv) consistant à estimer une valeur tertiaire représentative du prix de vente dudit contenu à certains au moins desdits clients de l'opérateur en fonction de ladite valeur secondaire attribuée audit contenu.

7. Procédé selon la revendication 6, **caractérisé en ce qu'**il comprend une étape v) consistant à intégrer ledit contenu dans un groupe de contenus choisis en fonction des valeurs tertiaires attribuées respectivement auxdits contenus et d'au moins une caractéristique choisie commune à ces contenus.

8. Procédé selon l'une des revendications 4 à 7, **caractérisé en ce qu'**il comprend une étape vi) consistant, lorsque ledit contenu a été mis à la disposition de clients pendant une durée choisie, à déterminer le nombre de clients ayant acheté et téléchargé ledit contenu afin de le comparer au nombre de clients initialement déterminé pour ce même contenu et dont est issue la valeur primaire attribuée audit contenu, puis à adapter ladite valeur tertiaire attribuée audit contenu en fonction du résultat de cette comparaison.

9. Dispositif (D) d'obtention automatique d'informations relatives au téléchargement de contenus par des clients d'au moins un opérateur de réseau de communication, **caractérisé en ce qu'**il comprend i) des moyens de comparaison (MC) agencés pour comparer des premiers ensembles de données constituant des profils de clients dudit opérateur à un second ensemble de données décrivant un contenu susceptible d'être mis à la disposition de clients dudit opérateur afin de déterminer le nombre de clients dont le profil correspond au moins partiellement audit contenu, et ii) des moyens de traitement (MT) agencés pour attribuer audit contenu une valeur primaire fonction au moins dudit nombre de clients déterminé.

10. Dispositif selon la revendication 9, **caractérisé en ce que** lesdits moyens de comparaison (MC) sont agencés i) pour comparer les premiers ensembles de données, qui constituent les profils de tous les clients dudit opérateur, au second ensemble de données décrivant un contenu susceptible d'être mis à la disposition de clients dudit opérateur afin de déterminer un premier nombre de clients dont le profil correspond au moins partiellement audit contenu, et ii) pour comparer les premiers ensembles de données, qui constituent les profils de clients dudit opérateur appartenant à au moins un groupe choisi correspondant à au moins un critère choisi, audit second ensemble de données afin de déterminer le nombre de clients dudit groupe choisi dont le profil correspond au moins partiellement audit contenu, et **en ce que** lesdits moyens de traitement (MT) sont agencés pour attribuer audit contenu des première et seconde valeurs primaires fonction respectivement desdits premier et second nombres de clients déterminés.

11. Dispositif selon l'une des revendications 9 et 10, **caractérisé en ce que** lesdits moyens de traitement (MT) sont agencés pour pondérer chaque valeur primaire en fonction d'au moins un critère choisi.

12. Dispositif selon l'une des revendications 9 à 11, **caractérisé en ce que** lesdits moyens de traitement (MT) sont agencés pour estimer une valeur secondaire en fonction de chaque valeur primaire attribuée audit contenu.

13. Dispositif selon la revendication 12, **caractérisé en ce que** lesdits moyens de traitement (MT) sont agencés pour estimer une valeur secondaire représentative du prix auquel ledit opérateur peut acheter ledit contenu pour le revendre à des clients.

14. Dispositif selon l'une des revendications 12 et 13, **caractérisé en ce qu'**il comprend des moyens de gestion (MG) agencés pour estimer une valeur tertiaire représentative du prix de vente dudit contenu à certains au moins desdits clients de l'opérateur en fonction de ladite valeur secondaire attribuée audit contenu.

15. Dispositif selon la revendication 14, **caractérisé en ce que** lesdits moyens de gestion (MG) sont agencés pour intégrer ledit contenu dans un groupe de contenus choisis en fonction des valeurs tertiaires attribuées respectivement auxdits contenus et d'au moins une caractéristique choisie commune à ces contenus.

16. Dispositif selon l'une des revendications 14 et 15, **caractérisé en ce que** lesdits moyens de gestion (MG) sont agencés, lorsque ledit contenu a été mis à la disposition de clients pendant une durée choisie, pour déterminer le nombre de clients ayant acheté et téléchargé ledit contenu afin de le comparer au nombre de clients initialement déterminé pour ce même contenu et dont est issue la valeur primaire attribuée audit contenu, puis pour adapter ladite valeur tertiaire attribuée audit contenu en fonction du résultat de cette comparaison.
